# EUROPÄISCHE PATENTSCHRIFT

(11) **EP 0 421 052 B1**
(45) Veröffentlichungstag und Bekanntmachung des Hinweises auf die Patenterteilung: **29.06.1994**
(21) Anmeldenummer: 90108877.3
(22) Anmeldetag: 11.05.1990
(51) Int. Cl.: F16F 13/00

(54) **Hydraulisch gedämpfte Hülsengummifeder**
Hydraulically-damped rubber bushing
Manchon élastique amorti hydrauliquement

(30) Priorität: 05.10.1989 DE 3933197
(43) Veröffentlichungstag der Anmeldung: 10.04.1991
(73) Patentinhaber: Firma Carl Freudenberg, 69469 Weinheim (DE)
(72) Erfinder: Hamaekers, Arno, D-6946 Gorxheimertal (DE); Rudolph, Axel, D-6100 Darmstadt (DE)

(56) Entgegenhaltungen:
- EP-A- 0 009 120
- PATENT ABSTRACTS OF JAPAN vol. 11, no. 296 (M-627)(2743) 25 September 1987, & JP-A-62 88834 (BRIDGESTONE CORP) 23 April 1987,
- PATENT ABSTRACTS OF JAPAN vol. 13, no. 65 (M-797)(3413) 14 Februar 1989, & JP-A-63 266239 (MARUGO RUBBER KOGYO KK) 2 November 1988,
- PATENT ABSTRACTS OF JAPAN vol. 10, no. 14 (M-447)(2071) 21 Januar 1986, & JP-A-60 175836 (TOYOTA JIDOSHA KK) 10 September 1985,

## Beschreibung

Die Erfindung betrifft eine hydraulisch gedämpfte Hülsengummifeder nach dem Oberbegriff von Anspruch 1.

Eine solche Hülsengummifeder ist aus der JP-A-62-888834 bekannt. Die Kammerpaare sind einander in axialer Richtung benachbart zugeordnet und jeweils in sich flüssigkeitsdicht abgeschlossen.

Aus der EP 0 0009 120 ist eine Hülsengummifeder bekannt, deren Dämpfungswirkung nur in einem bestimmten Frequenzbereich zur Verfügung steht, was wenig befriedigend ist.

Der Erfindung liegt die Aufgabe zugrunde, eine Hülsengummifeder der eingangs genannte Art derart weiterzuentwickeln, daß eine vereinfachte Herstellbarkeit gegeben ist.

Diese Aufgabe wird erfindungsgemäß bei einer Hülsengummifeder nach dem Oberbegriff mit den kennzeichnenden Merkmalen von Anspruch 1 gelöst. Auf vorteilhafte Ausgestaltungen nehmen die Unteransprüche bezug.

Bei der erfindungsgemäßen Hülsengummifeder ist es vorgesehen, daß die Kammerpaare eine gemeinsame, ineinander übergehende obere Kammer haben. Hinsichtlich einer vereinfachten Herstellbarkeit der vorgeschlagenen Hülsengummifeder kommt einer solchen Ausbildung eine besondere Bedeutung zu.

Die Kammerpaare können sich durch Wandungen einer voneinander abweichenden Ausbauchungselastizität voneinander unterscheiden. Hinsichtlich der Ausbauchungselastizität ist die insgesamt verfügbare Ausbauchungselastizität der Wandungen eines jeden Kammerpaares gemeinsam zu betrachten, wodurch es möglich ist, innerhalb eines jeden Kammerpaares eine Kammer vorzusehen, die hinsichtlich der Ausbauchungselastizität ihrer Wandung mit einer Kammer eines anderen Kammerpaares übereinstimmt.

Die Dämpfungsöffnungen lassen sich in ihren Dimensionen verändern durch Variation des Querschnittes und/oder der Länge. Die Zuordnung zu einer bestimmten Frequenz zu dämpfender Schwingungen läßt sich hierdurch oft besonders einfach erreichen.

Maßgeblich ist diesbezüglich diejenige Frequenz eingeleiteter Schwingungen, bei der die in der Dämpfungsöffnung enthaltene Flüssigkeitsmasse durch die summarischen Ausbauchungselastizitäten der Wände der beiderseits angrenzenden Kammern in eine Resonanzbewegung gelangt. Die diesbezüglichen Bedingungen lassen sich für den Bereich der beiden Dämpfungsöffnungen auch dann voneinander abweichend gestalten, wenn die Kammerpaare eine gemeinsame obere Kammer haben.

Der Gegenstand der Erfindung wird nachfolgend anhand der in der Anlage beigefügten Zeichnungen weiter verdeutlicht. Es zeigen:
- Figur 1: eine Hülsengummifeder in längsgeschnittener Darstellung.
- Figur 2: Die Hülsengummifeder nach Figur 1 in quergeschnittener Darstellung.
- Figur 3: zwei Diagramme, in denen zum einen die Dämpfung und zum anderen die Federrate über der Frequenz eingeleiteter Schwingungen aufgetragen ist.
- Figur 4: eine abweichend gestaltete Hülsengummifeder in quergeschnittener Darstellung.

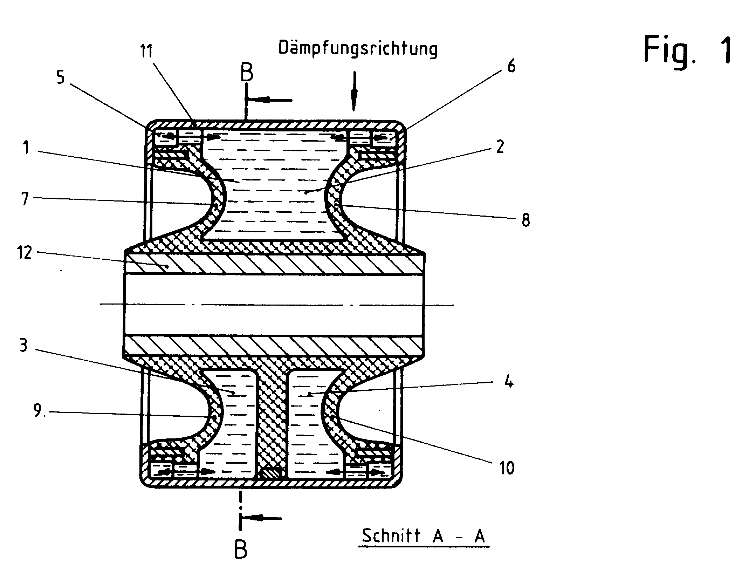

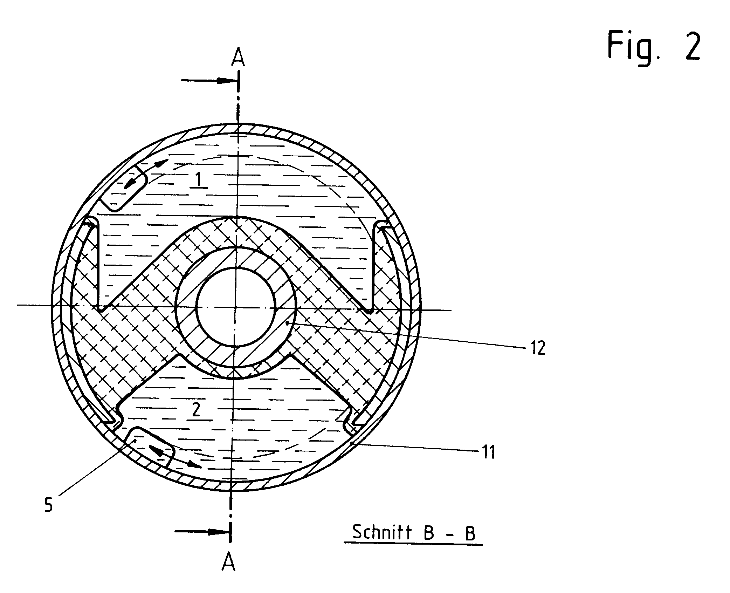

Die in den Figuren 1 und 2 gezeigte Hülsengummifeder besteht aus einem Außenrohr 11 und einem Innenrohr 12, welche einander und einen eingefügten Gummikörper flüssigkeitsdicht umschließen. Der Gummikörper enthält in Dämpfungsrichtung übereinanderliegend zwei Kammerpaare 1, 3 und 2, 4, die eine gemeinsame, ineinander übergehende obere Kammer haben, wobei die Kammerpaare 1,3; 2,4 durch elastische Wandungen voneinander getrennt und mit einer hydraulischen Flüssigkeit gefüllt sind. Die Kammern 1, 3 und 2, 4 eines jeden Kammerpaares sind durch eine kanalartig gestaltete Dämpfungsöffnung 5 bzw. 6 flüssigkeitsleitend verbunden. Die Dämpfungsöffnungen 5 und 6 haben einen übereinstimmenden Querschnitt. Die die Kammern 1, 2, 3 und 4 in axialer Richtung begrenzenden Stirnwände haben eine voneinander abweichende Ausbauchungselastizität, wobei die einzelnen Werte so festgelegt sind, daß sich die im Bereich eines jeden Kammerpaares 1, 3 bzw. 2, 4 insgesamt meßbare Ausbauchungselastizität voneinander abweichend gestaltet. Bei Einleitung von Schwingungen gerät hierdurch die in der Dämpfungsöffnung 5 enthaltene Flüssigkeitsmasse bei einer anderen Frequenz in eine Resonanzbewegung als die in der Dämpfungsöffnung 6 enthaltene Flüssigkeitsmasse. Die Dämpfungswirksamkeiten der Dämpfungsöffnungen 5 und 6 treten dementsprechend in voneinander abweichenden Frequenzbereichen auf.

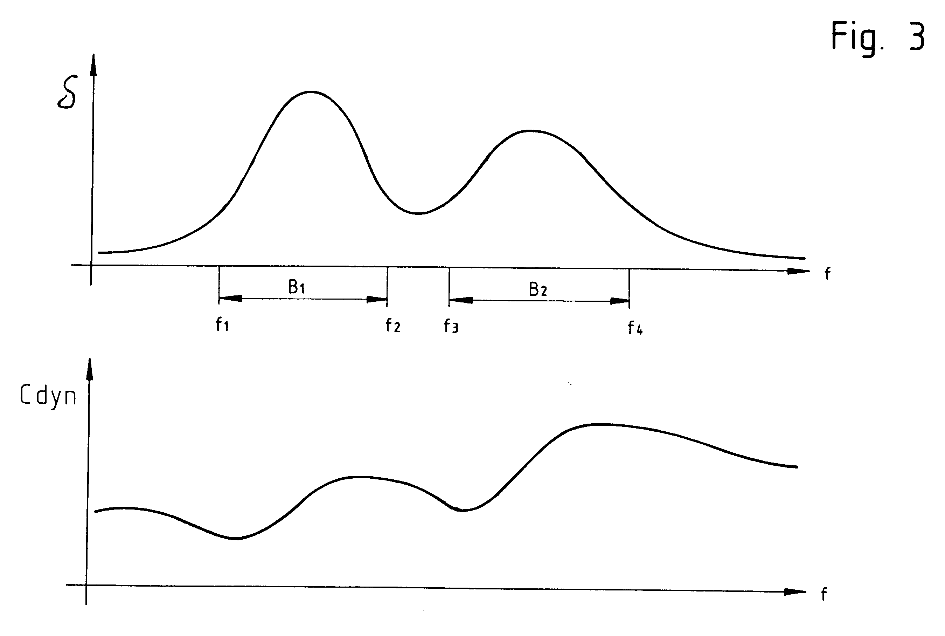

Diese sind in der oberen Skizze in Figur 3 mit B₁ und B₂ bezeichnet. Die Federraten weisen an den entsprechenden Stellen einen geringen Anstieg auf. Das zugehörige Diagramm findet sich in Figur 3 unterhalb des vorstehend angesprochenen.

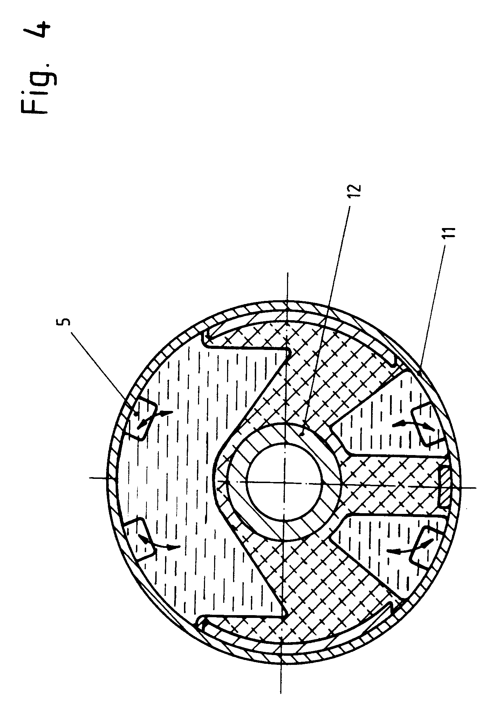

Figur 4 zeigt eine Ausführung in quergeschnittener Darstellung, bei der die jeweils ein Kammerpaar bildenden Kammern 1, 3 und 2, 4 seitlich nebeneinanderliegend angeordnet sind. Hierdurch weist die Hülsengummifeder in Querrichtung eine größere Steifigkeit auf als in Längsrichtung. Die übrige Ausführung entspricht der vorstehend beschriebenen.

## Patentansprüche

1. Hydraulisch gedämpfte Hülsengummifeder, umfassend ein Außen- (11) und ein Innenrohr (12), die durch einen gummielastischen Federkörper aufeinander abgestützt sind, wobei in dem Federkörper wenigstens zwei flüssigkeitsgefüllte Kammerpaare (1, 3; 2, 4) aus zwei in Bewegungsrichtung einen Abstand aufweisenden Kammern vorgesehen sind, wobei die Kammern eines jeden Kammerpaares (1,3;2,4) durch eine Dämpfungsöffnung (5, 6) miteinander verbunden sind und wobei die Kammern (1, 2, 3, 4) der Kammerpaare (1, 3; 2, 4) durch Dämpfungsöffnungen (5, 6) eines von voneinander abweichenden Querschnitts und/oder einer voneinander abweichenden Länge verbunden sind, um in den Dämpfungsöffnungen (5, 6) eine voneinander abweichende Resonanzfrequenz der enthaltenen Flüssigkeitsmassen bei Einleitung von Schwingungen zu erhalten, dadurch gekennzeichnet, daß die Kammerpaare (1,3;2,4) eine gemeinsame, ineinanderübergehende obere Kammer haben.

2. Hülsengummifeder nach Anspruch 1, dadurch gekennzeichnet, daß sich die Kammerpaare (1, 3; 2, 4) durch Wandungen einer voneinander abweichenden Ausbauchungselastizität voneinander unterscheiden.

## Claims

1. A hydraulically damped rubber bushing, comprising an outer tube (11) and an inner tube (12), which tubes are supported on one another by a rubber-elastic spring body, there being provided in the spring body at least two fluid-filled pairs of chambers (1, 3; 2, 4) comprising two chambers having a spacing in the direction of movement, the chambers of each pair of chambers (1, 3; 2, 4) being connected to one another by a damping opening (5, 6), and the chambers (1, 2, 3, 4) of the pairs of chambers (1, 3; 2, 4) being connected by damping openings (5, 6) of different cross-section and/or of different length in order to obtain in the damping openings (5, 6) a different resonance frequency of the fluid masses contained when vibrations are introduced, characterised in that the pairs of chambers (1, 3; 2, 4) have a common upper chamber merging into one another.

2. A rubber bushing according to claim 1, characterised in that the pairs of chambers (1, 3; 2, 4) differ from one another by walls of different expansion elasticity.

## Revendications

1. Manchon élastique amorti hydrauliquement, comportant un tube extérieur (11) et un tube intérieur (12), qui s'appuyent l'un contre l'autre au moyen d'un corps formant ressort, ayant l'élasticité du caoutchouc et dans lequel il est prévu au moins deux paires de chambres (1, 3 ; 2, 4) remplies de liquide et se composant respectivement de deux chambres présentant un espacement dans la direction de mouvement, les chambres de chaque paire (1, 3 ; 2, 4) étant reliées entre elles par une ouverture d'amortissement (5, 6) et les chambres (1, 2, 3, 4) des paires de chambres (1, 3 ; 2, 4) étant reliées par des ouvertures d'amortissement (5, 6) ayant des sections différant l'une de l'autre et/ou des longueurs différant l'une de l'autre, de façon à obtenir, pour les masses de liquide contenues dans les ouvertures d'amortissement (5, 6), des fréquences de résonance différant l'une de l'autre lors d'une application d'oscillations, caractérisé en ce que les paires de chambres (1, 3 ; 2, 4) comportent une chambre supérieure commune par laquelle elles sont en interpénétration.

2. Manchon élastique selon la revendication 1, caractérisé en ce que les paires de chambres (1, 3 ; 2, 4) se différencient l'une de l'autre par des parois ayant des élasticités de déformation différant l'une de l'autre.
